# EUROPÄISCHE PATENTSCHRIFT

(11) **EP 0 546 451 B1**
(45) Veröffentlichungstag und Bekanntmachung des Hinweises auf die Patenterteilung: **17.04.1996**
(21) Anmeldenummer: 92120657.9
(22) Anmeldetag: 03.12.1992
(51) Int. Cl.: H01H 35/14, B60R 21/32, B60R 22/46

(54) **Fahrzeugsensitiver mechanischer Kontaktgeber**
Vehicle sensitive mecanical contactor
Contacteur mécanique sensible aux mouvements d'un véhicule

(30) Priorität: 10.12.1991 DE 4140691
(43) Veröffentlichungstag der Anmeldung: 16.06.1993
(60) Teilanmeldung: 95114374.2
(73) Patentinhaber: TRW Occupant Restraint Systems GmbH, D-73553 Alfdorf (DE)
(72) Erfinder: Föhl, Artur, W-7060 Schorndorf (DE)
(74) Vertreter: Degwert, Hartmut, Dipl.-Phys.

(56) Entgegenhaltungen:
- WO-A-90/15732
- GB-A- 2 236 619
- GB-A- 2 236 857
- US-A- 3 439 137
- US-A- 3 655 928
- US-A- 5 153 393

## Beschreibung

Die Erfindung betrifft einen fahrzeugsensitiven mechanischen Kontaktgeber in Kombination mit einem pyrotechnischen Gasgenerator mit elektrischen Zünder zur Auslösung eines Rückhaltesystems in Fahrzeugen, wobei der Kontaktgeber mit einem zur fahrzeugfesten Anbringung bestimmten Gehäuse und einem darin beweglich aufgenommenen Massekörper versehen ist, der mit einem elektrischen Kontaktpaar zusammenwirkt, wobei an dem Massekörper ein erstes, federbelastetes Kontaktelement, das in einem vorbestimmten Abstand von einem mit dem ersten Kontaktelement als Kontaktpaar zusammenwirkenden zweiten Kontaktelement angeordnet ist, in Anlage ist und den Massekörper mit vorbestimmter Kraft in eine Ruhestellung von dem zweiten Kontaktelement fort beaufschlagt. Ein derartiger Kontaktgeber in Kombination mit einem Gasgenerator ist beispielsweise aus der GB-A-2 236 619 bekannt.

Zur Auslösung von Rückhaltesystemen in Fahrzeugen, beispielsweise Gurtstraffern in einem Sicherheitsgurtsystem oder Gassack-Aufprallschutzsystemen, wird gewöhnlich ein zentraler fahrzeugsensitiver Sensor verwendet, dessen elektrisches Ausgangssignal in einer elektronischen Steuereinheit zu einem Auslösesignal verarbeitet wird. Dieses Auslösesignal wird einem elektrischen Zünder an einem pyrotechnischen Gasgenerator des Rückhaltesystems zugeführt. Der Aufwand für die elektronische Steuereinheit ist beträchtlich. Sie hat einen hohen Anteil an den Gesamtkosten des Rückhaltesystems.

Es wurden auch bereits mechanische Kontaktgeber mit einem beweglich in einem Gehäuse gelagerten Massekörper vorgeschlagen, der auf die Fahrzeugverzögerung ansprechend einen elektrischen Kontakt mit einem feststehend im Gehäuse angebrachten Kontaktelement herstellt. Diese mechanischen Kontaktgeber können mit geringem Aufwand verwirklicht werden, konnten sich jedoch bisher nicht durchsetzen, weil die Kontaktgabe nicht ausreichend zuverlässig erfolgte.

Bei dem aus der GB-A-2 236 619 bekannten fahrzeugsensitiven mechanischen Kontaktgeber der eingangs genannten Art erfolgt der Anschluß der einem Gassack des Rückhaltesystems zugeordneten Betätigungseinrichtung über ein gesondertes Kabel. Der als Kugel ausgebildete Massekörper wird im Falle einer Auslösung über eine Strecke bewegt, die zumindest gleich dem Kugeldurchmesser ist. Aufgrund dieser relativ großen Strecke, über die die Kugel im Falle einer Auslösung bewegt werden muß, ist die Reaktionszeit relativ groß. Während einer jeweiligen Auslösung wird die Bewegung des Massekörpers nur durch das Kontaktpaar und damit auch nur in einer Richtung gedämpft.

Der Erfindung liegt die Aufgabe zugrunde, einen fahrzeugsensitiven mechanischen Kontaktgeber in Kombination mit einem Gasgenerator zur Verfügung zu stellen, der sich durch eine besonders einfache, kompakte Ausbildung und sichere Kontaktgabe auszeichnet.

Diese Aufgabe wird bei einem Kontaktgeber mit Gasgenerator der eingangs angegebenen Art erfindungsgemäß dadurch gelöst, daß das Gehäuse auf den Mantel des pyrotechnischen Gasgenerators mit elektrischem Zünder aufsteckbar ist und daß der Gasgenerator und das Gehäuse mit Komplementären Steckverbindungselementen ausgestattet sind, die beim Aufstecken des Gehäuses auf den Mantel des Gasgenerators miteinander in Eingriff gelangen, um den elektrischen Zünder an den Kontaktgeber anzuschließen. Vorzugsweise sind beide Kontaktelemente jeweils als Kontaktfeder ausgebildet, die am Gehäuse befestigt ist.

Durch die erste Kontaktfeder wird der Massekörper federnd in seiner Ruhestellung gehalten. Erst wenn die Fahrzeugverzögerung einen vorbestimmten Schwellwert überschritten hat, wird die Vorspannkraft der Kontaktfeder überwunden, so daß die Massekugel in Bewegung versetzt wird. Durch die Massekugel wird dann die Kontaktfeder ausgelenkt und in Richtung des am Gehäuse befestigten Kontaktes umgebogen. Das Kontaktpaar ist durch die Kontaktfeder und den am Gehäuse befestigten Kontakt gebildet; die Massekugel hat keine elektrische Funktion. Vorzugsweise ist auch der am Gehäuse befestigte Kontakt als Kontaktfeder ausgebildet. Die beiden Kontaktfedern sind im Bereich ihrer Berührungsflächen mit üblichem Kontaktmaterial beschichtet, das hohen Anforderungen an Korrosionsbeständigkeit und geringem Übergangswiderstand genügt. Im Ruhezustand haben die Kontaktfedern einen vorbestimmten Abstand voneinander, der sehr klein sein kann, wodurch eine kleine Bewegungsstrecke des Massekörpers und infolgedessen eine kurze Ansprechzeit gewährleistet ist. Da überdies der Massekörper nur eine Masse von beispielsweise 25 bis 35 g benötigt, kann der mechanische Kontaktgeber äußerst kompakt und mit geringem Gewicht ausgeführt werden.

In Weiterbildung der Erfindung sind Maßnahmen vorgesehen, um ein Kontaktprellen zu verhindern. Als erste Maßnahme ist vorgesehen, daß die am Gehäuse befestigte, zweite Kontaktfeder an ihrem freien Ende von der benachbarten Innenwand des Gehäuses einen vorbestimmten Abstand aufweist und durch den Massekörper über die dazwischen angeordnete erste Kontaktfeder in Richtung gegen die Innenwand des Gehäuses auslenkbar ist. Wenn der vorzugsweise als Kugel ausgebildete Massekörper in Bewegung kommt und die erste Kontaktfeder gegen die zweite stößt, kann diese federnd nachgeben, so daß der Stoß bedämpft wird. Auf diese Weise wird nicht nur ein Abprellen der Kontaktfedern voneinander vermieden, sondern es wird auch die Dauer der Kontaktgabe vergrößert. Der mechanische Kontaktgeber gibt daher einen sauberen Auslöseimpuls von ausreichender Dauer ab.

Als zweite Maßnahme zur Bekämpfung des Kontaktprellens ist vorgesehen, daß mit der Oberfläche des Massekörpers eine unter vorbestimmter Vorspannung stehende Federeinrichtung, vorzugsweise eine Federlamelle, in Reibungseingriff steht. Die Bewegung der Kugel in Richtung der am Gehäuse befestigten Kontaktfeder wird durch Reibung bedämpft, so daß die Güte des mechanischen Resonanzsystems, welches durch die Kontaktfedern und den Massekörper gegeben ist, vermindert wird. Die Federlamelle wird vorzugsweise über der Oberseite des Massekörpers angeordnet, so daß sie auch dessen Vertikalbewegungen verhindert oder zumindest stark bedämpft.

Der Kontaktgeber eignet sich aufgrund seiner kompakten Ausbildung ausgezeichnet dazu, unmittelbar auf den Mantel eines Gasgenerators am Rückhaltesystem, beispielsweise einem pyrotechnischen Gurtstraffer, aufgesteckt zu werden.

Das Rückhaltesystem kann dann als komplette Baugruppe ausgebildet werden.

Weitere Vorteile der Erfindung ergeben sich aus der folgenden Beschreibung und aus der Zeichnung, auf die Bezug genommen wird. In der Zeichnung zeigen:
- Fig. 1: einen senkrechten Längsschnitt der in Fig. 4 in Perspektive gezeigten Ausführungsform des mechanischen Kontaktgebers;
- Fig. 2: einen senkrechten Querschnitt des Kontaktgebers nach Fig. 4;
- Fig. 3: einen waagerechten Schnitt des Kontaktgebers nach Fig. 4;
- Fig. 4: eine Perspektivansicht einer ersten Ausführungsform des mechanischen Kontaktgebers;
- Fig. 5: eine Schnittansicht einer Weiterbildung der in den Fig. 1 bis 4 gezeigten Ausführungsform des Kontaktgebers mit einem Teil eines Sicherheitsgurt-Rückhaltesystems;
- Fig. 6: einen Schnitt quer zur Schnittebene in Fig. 5;
- Fig. 7: einen Teilschnitt entlang einer Ebene senkrecht zur Schnittebene in Fig. 5; und
- Fig. 8: eine Perspektivansicht der in den Fig. 5 bis 7 gezeigten Ausführungsform des Kontaktgebers.

Im Innenraum eines allgemein quaderförmigen Gehäuses 10 aus Kunststoffmaterial ist als fahrzeugsensitiver Massekörper eine Massekugel 12 beweglich aufgenommen. Die Massekugel 12 ruht auf einer prismaförmigen Bodenwandung des Gehäuses 10. Dieses besteht aus einem Bodenteil 10a und einem Deckelteil 10b. Es ist mit seitlichen angeformten Montageflanschen 10c versehen. Bodenteil 10a und Deckelteil 10b sind miteinander verklebt oder verschweißt. Im Bodenteil 10a des Gehäuses 10 sind zwei Kontaktfedern 14, 16 befestigt. Die Kontaktfedern 14, 16 sind rechtwinklig abgebogen und aus dem Bodenteil 10a des Gehäuses herausgeführt. Ihre aus dem Gehäuse herausgeführten freien Enden bilden Anschlußteile für eine komplementäre Steckvorrichtung. Die äußeren Anschlußteile der Kontaktfedern 14, 16 sind von einem angeformten Stecksockel 10d des Gehäuses 10 umgeben.

Eine im Bodenteil 10a des Gehäuses 10 verankerte, rechtwinklig abgebogene Federlamelle 18 liegt unter vorbestimmter Vorspannung an der Oberseite der Massekugel 12 auf und steht mit dieser in Reibungseingriff. Auch die erste Federlamelle 14 ist unter einer vorbestimmten Vorspannung an der Oberfläche der Massekugel 12 in Anlage und drückt diese gegen das in das Innere des Gehäuses hineinragende Ende einer Justierschraube 20, die in eine Gewindebohrung des Bodenteils 10a des Gehäuses eingeschraubt ist.

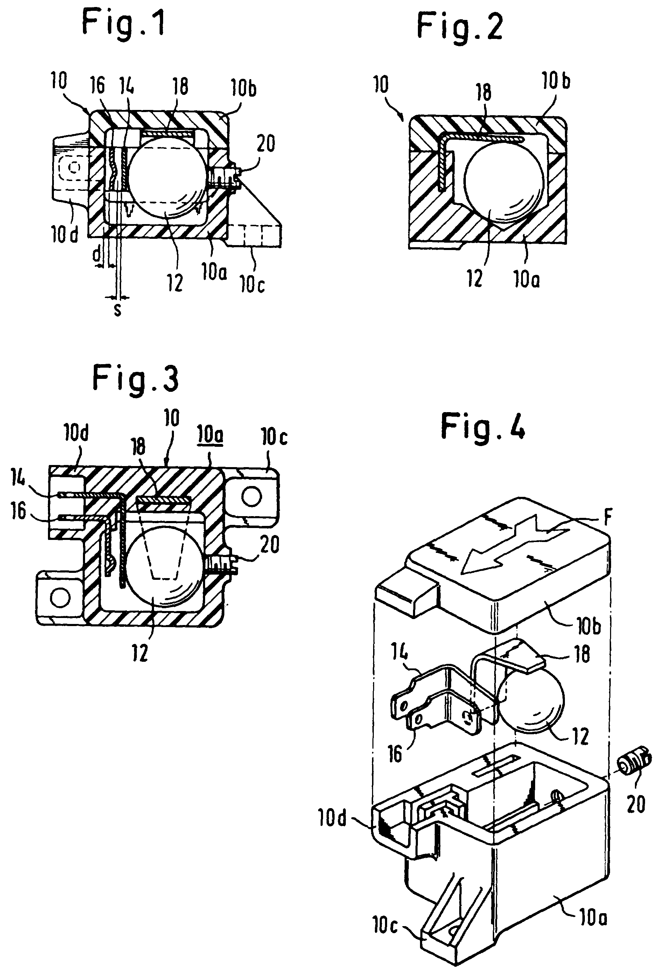

Die Kontaktfedern 14, 16 haben einen vorbestimmten Abstand s voneinander (Fig. 1). Ferner hat die Kontahtfeder 16 einen vorbestimmten Abstand d von der ihr benachbarten Innenwandung des Gehäuses. Der Kontaktgeber wird im Fahrzeug in einer Richtung eingebaut, die durch einen auf dem Deckelteil 10b des Gehäuses gut sichtbar angebrachten Pfeil F (Fig. 4) angegeben ist. Unter der Wirkung einer Fahrzeugverzögerung ist die Massekugel 12 bestrebt, die Kontaktfeder 14 in Richtung zu der Kontaktfeder 16 auszulenken. Sie setzt sich aber erst in Bewegung, wenn ihre Trägheitskraft die Vorspannkraft der Kontaktfeder 14 überwindet. Zusätzlich wird die Bewegung der Massekugel 12 durch die Reibung an der Federlamelle 18 behindert. Die Summe aus Vorspannkraft der Kontaktfeder 14 und Reibungskraft zwischen Federlamelle 18 und der Oberfläche der Massekugel 12 ist so gewählt, daß diese sich bei einem vorbestimmten Wert der Fahrzeugverzögerung in Bewegung setzt. Mittels der Justierschraube 20 kann dieser Wert eingestellt werden. Nach erfolgter Einstellung wird die Justierschraube 20 vorzugsweise mit Lack versiegelt.

Bei einer vereinfachten Ausführungsform wird auf die Justierschraube 20 verzichtet.

Wenn der vorbestimmte Verzögerungswert überschritten wird, setzt sich die Massekugel 12 in Bewegung und wird unter Auslenkung der Kontaktfeder 14 beschleunigt. Da der Abstand s zwischen den Kontaktfedern 14, 16 sehr klein sein kann, beispielsweise 1 oder 2 mm, gelangen die Kontaktfedern 14, 16 bereits nach einer sehr kurzen Zeitspanne, die nach der bekannten Gesetzmäßigkeit s = ½ Δa t berechnet wird, miteinander in Berührung. Bei ausreichender Verzögerung wird nun auch die Kontaktfeder 16 ausgelenkt, die so den von der Massekugel 12 ausgeübten Stoß bedämpft. Die Auslenkung der zweiten Kontaktfeder 16 verhindert nicht nur ein Zurückprellen der Kontaktfeder 14, sondern hat auch eine Verlängerung der Zeitspanne zur Folge, während welcher eine sichere Kontaktgabe erfolgt. Durch die von der Federlamelle 18 verursachte Reibung wird das aus den Kontaktfedern 14, 16 und der Massekugel 12 bestehende Resonanzsystem stark bedämpft, so daß jegliche Schwingneigung unterdrückt wird. Die Federlamelle 18 verhindert darüber hinaus unerwünschte Vertikalbewegungen der Massekugel 12.

Es wurde gefunden, daß die durch die Auslenkung der zweiten Kontaktfeder 16 bewirkte Bedämpfung des von der Massekugel 12 ausgeübten Stoßes jegliches Kontaktprellen verhindert, so daß ein sauberer Auslöseimpuls von ausreichender Dauer erzeugt werden kann. Fehlauslösungen werden durch die Vorspannung der Kontaktfeder 14 und die Bedämpfung mittels der Federlamelle 18 sicher vermieden. Schließlich können die Kontaktfedern 14, 16 als Kontaktfederlamellen aus bewährten Werkstoffen hergestellt und zusätzlich im Kontaktbereich mit hochwertigen Kontaktwerkstoffen beschichtet werden, die korrosionsbeständig sind und einen niedrigen Übergangswiderstand gewährleisten. Der Kontaktgeber arbeitet daher sehr zuverlässig.

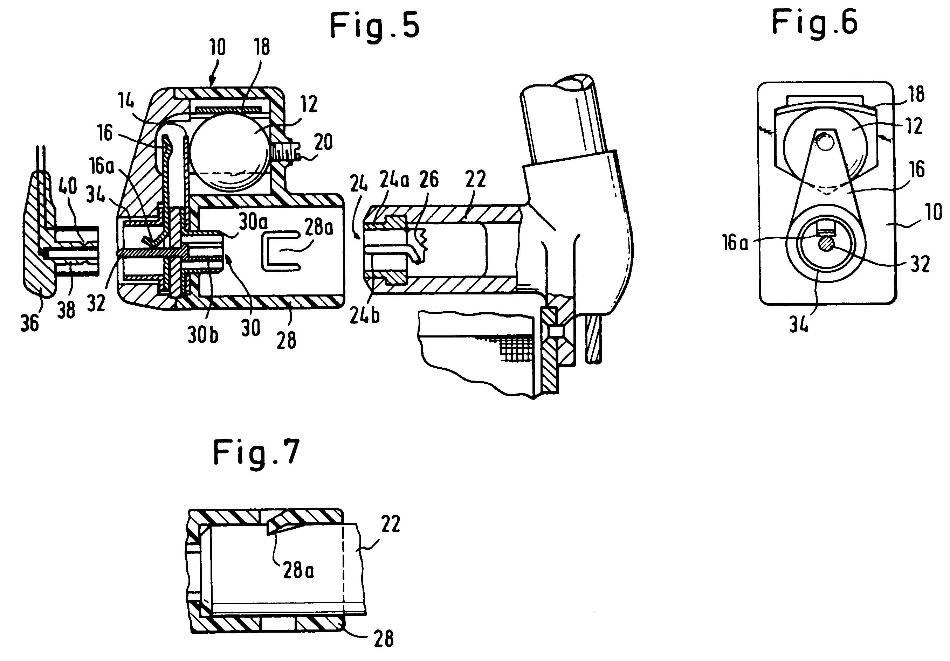

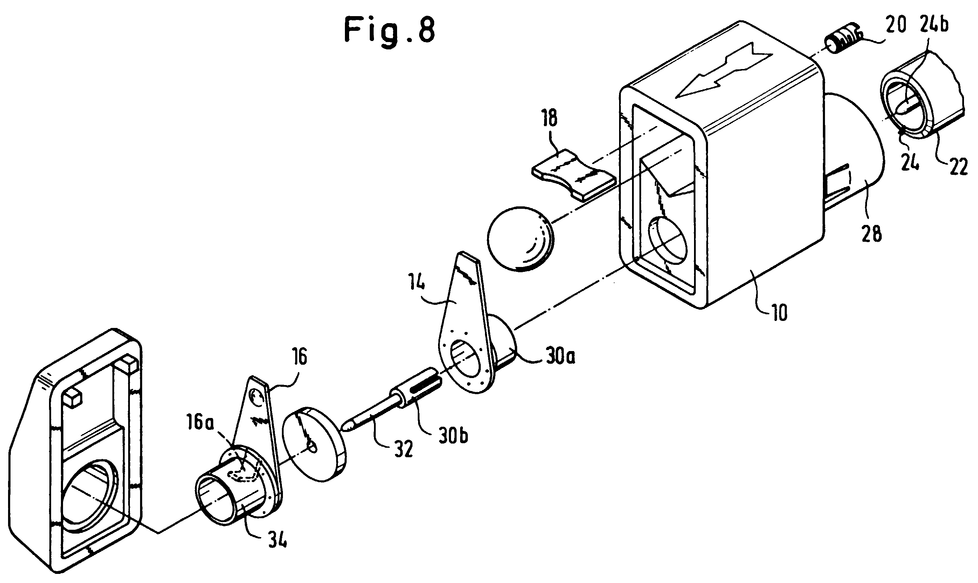

Für die Massekugel 12 ist eine geringe Masse von beispielsweise 25 bis 35 g ausreichend. In Verbindung mit dem kurzen Bewegungsweg der Massekugel 12 von beispielsweise nur 1 bis 2 mm bis zur Kontaktgabe ergibt sich eine überaus kompakte Bauform des Kontaktgebers. Bei der in den Fig. 5 bis 8 gezeigten Ausführungsform wird dieser Umstand ausgenutzt, indem der Kontaktgeber mit einem Rückhaltesystem, insbesondere einem pyrotechnischen Gurtstraffer, zu einer kompakten Baugruppe vereinigt wird.

Die in den Fig. 5 bis 8 gezeigte Ausführungsform des Kontaktgebers ist dazu bestimmt, auf den zylindrischen Mantel eines pyrotechnischen Gasgenerators 22 an einen Gurtaufroller mit Gurtstraffer aufgesteckt zu werden. Gurtaufroller und Gurtstraffer sind in Fig. 5 nur angedeutet, da sie ansonsten herkömmlich ausgebildet sind. Der pyrotechnische Gasgenerator 22 ist an seinem freien Ende mit Steckkupplungselementen 24 für einen elektrischen Zünder 26 versehen. Der mechanische Kontaktgeber ist hinsichtlich aller Funktionsteile gleich ausgebildet wie bei der Ausführungsform nach den Fig. 1 bis 4 und wird daher nicht nochmals beschrieben. An dem Gehäuse 10 ist bei dieser Ausführungsform eine Buchse 28 angeformt, die auf den Mantel des Gasgenerators 22 aufschiebbar ist. Mittels einer in der Seitenwandung der Buchse 28 federnd angeformten Nase 28a, die in eine Aussparung in der Mantelfläche des Gasgenerators 22 eingreift, wird die aufgeschobene Buchse 28 gesichert. An ihrer Bodenwandung ist die Buchse 28 mit in ihren Innenraum hineinragenden Steckkupplungselementen 30 versehen, die komplementär zu den Steckkupplungselementen 24 des Gasgenerators 22 sind. Diese Steckkupplungselemente 24, 30 bilden eine Koaxial-Steckverbindung. Der radial äußere Anschluß 30a der Steckkupplungselemente 30 umgibt den radial inneren, axialen Anschluß 30b, der als Steckbuchse ausgebildet ist. In den Anschluß 30b ist ein entsprechender axialer Anschlußstift 24b der Steckkupplungselemente 24 einsteckbar. Der Anschluß 30a ist in den radial äußeren Buchsenteil 24a der Steckkupplungselemente 24 einschiebbar.

Die erste Kontaktfeder 14 ist mit dem radial äußeren Anschluß 30a der Steckkupplungselemente 30 verbunden. Die zweite Kontaktfeder 16 endet an ihrem aus dem Innenraum des Gehäuses 10 herausgeführten Teil als umgebogene Kontaktlamelle 16a. Diese Kontaktlamelle 16a steht in federndem Eingriff mit der Mantelfläche eines Kontaktteils 32 in Form eines axialen Anschlußstiftes, der einstückig und koaxial mit dem Anschluß 30b verbunden ist. Das Kontaktteil 32 ist von einem koaxialen Kontaktteil 34 in Form eines Steckbuchsenteils umgeben, welches mit der Kontaktfeder 16 verbunden ist. Die Kontaktteile 32 und 34 sind komplementär zu einem Koaxial-Anschlußstecker 36. Dessen radial innerer Anschluß ist von einer zylindrischen Hülse 38 aus Isoliermaterial umgeben, die eine umlaufende Nut 40 aufweist. Beim Aufstecken des Anschlußsteckers 36 greift das vordere Ende der Hülse 38 unter das umgebogene Ende der Federlamelle 16a und hebt diese von dem Kontaktteil 32 ab. Die Federlamelle 16a bildet, solange der Anschlußstekker 36 nicht aufgesteckt ist, einen Kurzschluß zwischen den Steckkupplungselementen 24 des elektrischen Zünders 26 des Gasgenerators 22, wenn der mechanische Kontaktgeber auf den Gasgenerator aufgeschoben ist. Durch diesen Kurzschluß wird das Aufbauen elektrostatischer Ladungen verhindert, die zu einer unbeabsichtigten Auslösung des elektrischen Zünders führen könnten. Erst durch das Aufstecken des Anschlußstekkers 36 wird der elektrische Zünder 26 entsichert. Die Federlamelle 16a greift dann in die umlaufende Rille 40 der Hülse 30, um den Anschlußstecker 36 am Kontaktgebergehäuse zu sichern. Dieses bildet, wie in Fig. 5 zu erkennen ist, insgesamt einen Zwischenstecker zwischen Anschlußstecker 36 und Gasgenerator 22. Der gesamte Kontaktgeber kann daher leicht in vorhandene Konstruktionen integriert werden und eignet sich auch zur fakultativen Ausstattung eines Rückhaltesystems, das ohne Änderung der Steckverbindungen an eine zentrale fahrzeugsensitive Steuereinheit angeschlossen werden kann.

## Patentansprüche

1. Fahrzeugsensitiver mechanischer Kontaktgeber in Kombination mit einem pyrotechnischen Gasgenerator (22) mit elektrischem Zünder (24) zur Auslösung eines Rückhaltesystems in Fahrzeugen,wobei der Kontaktgeber mit einem zur fahrzeugfesten Anbringung bestimmten Gehäuse (10) und einem darin beweglich aufgenommenen Massekörper (12) versehen ist, der mit einem elektrischen Kontaktpaar zusammenwirkt, wobei an dem Massekörper (12) ein erstes, federbelastetes Kontaktelement (14), das in einem vorbestimmten Abstand von einem mit dem ersten Kontaktelement (14) als Kontaktpaar zusammenwirkenden zweiten Kontaktelement (16) angeordnet ist, in Anlage ist und den Massekörper (12) mit vorbestimmter Kraft in eine Ruhestellung von dem zweiten Kontaktelement (16) fort beaufschlagt, dadurch gekennzeichnet, daß das Gehäuse (10) auf den Mantel des pyrotechnischen Gasgenerators (22) mit elektrischem Zünder (24) aufsteckbar ist und daß der Gasgenerator (22) und das Gehäuse (10) mit komplementären Steckverbindungselementen (24, 30) ausgestattet sind, die beim Aufstecken des Gehäuses (10) auf den Mantel des Gasgenerators (22) miteinander in Eingriff gelangen, um den elektrischen Zünder (24) an den Kontaktgeber anzuschließen.

2. Kontaktgeber und Gasgenerator (22) nach Anspruch 1, dadurch gekennzeichnet, daß das erste Kontaktelement (14) und das zweite Kontaktelement (16) jeweils als an dem Gehäuse (10) befestigte erste bzw. zweite Kontaktfeder ausgebildet sind.

3. Kontaktgeber und Gasgenerator (22) nach Anspruch 2, dadurch gekennzeichnet, daß die zweite Kontaktfeder (16) an ihrem freien Ende von der Innenwand des Gehäuses (10) einen vorbestimmten Abstand (d) aufweist und durch den Massekörper (12) über die dazwischen angeordnete erste Kontaktfeder (14) in Richtung gegen die benachbarte Innenwand des Gehäuses auslenkbar ist.

4. Kontaktgeber und Gasgenerator (22) nach Anspruch 3, dadurch gekennzeichnet, daß die erste und die zweite Kontaktfeder (14, 16) jeweils als Federlamelle ausgebildet sind.

5. Kontaktgeber und Gasgenerator (22) nach einem der Ansprüche 2 bis 4, dadurch gekennzeichnet, daß mit der Oberfläche des Massekörpers (12) eine unter vorbestimmter Vorspannung stehende Federeinrichtung (18) in Reibungseingriff steht.

6. Kontaktgeber und Gasgenerator (22) nach Anspruch 5, dadurch gekennzeichnet, daß die Federeinrichtung durch eine am Gehäuse befestigte Federlamelle (18) gebildet ist.

7. Kontaktgeber und Gasgenerator (22) nach einem der Ansprüche 2 bis 6, dadurch gekennzeichnet, daß der Massekörper (12) auf seiner von der ersten Kontaktfeder (14) abgewandten Seite an einer in die Wandung des Gehäuses (10) verstellbar eingeschraubten Justierschraube (20) abgestützt ist.

8. Kontaktgeber und Gasgenerator (22) nach einem der Ansprüche 2 bis 7, dadurch gekennzeichnet, daß der Massekörper (12) als Massekugel ausgebildet ist.

9. Kontaktgeber und Gasgenerator (22) nach Anspruch 8, dadurch gekennzeichnet, daß der Massekörper (12) auf einer prismaförmigen Bodenwandung des Gehäuses (10) geradlinig geführt ist.

10. Kontaktgeber und Gasgenerator (22) nach einem der vorhergehenden Ansprüche, dadurch gekennzeichnet, daß das Gehäuse (10) seinerseits als Zwischenstecker mit Steckkupplungselementen (30) zum Zusammenwirken mit Steckkupplungselementen (24) des Gasgenerators (22) und mit Kontaktteilen (32, 34) zum Zusammenwirken mit einem Anschlußstecker (36) ausgebildet ist und daß diese Kontaktteile (32, 34) bei nicht aufgestecktem Anschlußstecker (36) kurzgeschlossen sind.

11. Kontaktgeber und Gasgenerator (22) nach Anspruch 10, dadurch gekennzeichnet, daß die Kontaktteile (32, 34) koaxial ausgebildet und bei nicht aufgestecktem Anschlußstecker (36) durch eine Kontaktlamelle (16a) kurzgeschlossen sind, die durch Aufstecken des Anschlußsteckers (36) radial abspreizbar ist.

12. Kontaktgeber und Gasgenerator (22) nach einem der Ansprüche 2 bis 11, dadurch gekennzeichnet, daß die erste und die zweite Kontaktfeder (14, 16) jeweils einteilig mit aus dem Gehäuse (10) herausgeführten Anschlußteilen ausgebildet sind.

13. Kontaktgeber und Gasgenerator (22) nach den Ansprüchen 11 und 12, dadurch gekennzeichnet, daß der Anschlußteil der zweiten Kontaktfeder (16) einteilig an die Kontaktlamelle (16a) angeschlossen und mit dem radial äußeren Kontaktteil (34) verbunden ist.

14. Kontaktgeber und Gasgenerator (22) nach Anspruch 1 und Anspruch 12 oder 13, dadurch gekennzeichnet, daß der Anschlußteil der ersten Kontaktfeder (14) mit einem Anschluß (30a) der Steckkupplungselemente des Gehäuses (10) verbunden ist.

15. Kontaktgeber und Gasgenerator (22) nach Anspruch 14 und einem der Ansprüche 11 bis 13, dadurch gekennzeichnet, daß der radial innere Anschluß (30b) der Steckkupplungselemente (30) in Axialrichtung zu einem koaxialen Anschlußstift (24b) des Gasgenerators (22) hin verlängert und mit diesem verbindbar ist.

16. Kontaktgeber und Gasgenerator (22) nach Anspruch 15, dadurch gekennzeichnet, daß die erste Kontaktfeder (14) an den radial äußeren, den inneren umgebenden Anschluß (30a) der Steckkupplungselemente (30) angeschlossen ist.

## Claims

1. Vehicle-sensitive mechanical contactor in combination with a pyrotechnical gas generator (22) with an electrical igniter (24) for activating a restraint system in vehicles, wherein the contactor is provided with a housing (10) intended for vehicle-fixed mounting and a mass body (12) which is accommodated movably therein and cooperates with an electrical contact pair, wherein on the mass body (12) a first spring-loaded contact element (14) bears which is arranged at a predetermined distance from a second contact element (16) cooperating with the first contact element (14) as contact pair and urges the mass body (12) with predetermined force into a rest position away from the second contact element (16), characterized in that the housing is adapted to be plugged onto the jacket of the pyrotechnical gas generator (22) having the electrical igniter (24) and the gas generator (22) and the housing (10) are equipped with complementary plug connection elements (24, 30) which come into engagement with each other when the housing (10) is placed on the jacket of the gas generator (22), in order to connect the electrical igniter (22) to the contactor.

2. Contactor and gas generator (22) according to claim 1, characterized in that the first contact element (14) and the second contact element (16) are respectively formed as first and second contact springs mounted on the housing (10).

3. Contactor and gas generator (22) according to claim 2, characterized in that the second contact spring (16) at its free end has a predetermined distance (d) from the inner wall of the housing (10) and is deflectable in the direction towards the adjacent inner wall of the housing by the mass body (12) via the first contact spring (14) arranged therebetween.

4. Contactor and gas generator (22) according to claim 3, characterized in that the first and second contact springs (14, 16) are each constructed as a spring strip.

5. Contactor and gas generator (22) according to any one of claims 2 to 4, characterized in that a spring means (18) subjected to a predetermined bias is in frictional engagement with the surface of the mass body (12).

6. Contactor and gas generator (22) according to claim 5, characterized in that the spring means is formed by a spring strip (18) secured to the housing.

7. Contactor and gas generator (22) according to any one of claims 2 to 6, characterized in that the mass body (12) is supported on its side remote from the first contact spring (14) on an adjusting screw (20) adjustably screwed into the wall of the housing (10).

8. Contactor and gas generator (22) according to any one of claims 2 to 7, characterized in that the mass body (12) is formed as a mass ball.

9. Contactor and gas generator (22) according to claim 8, characterized in that the mass body (12) is guided rectilinearly on a prism-like bottom wall of the housing (10).

10. Contactor and gas generator (22) according to claim 11, characterized in that the housing (10) is in turn formed as an intermediate connector with plug coupling elements (30) for cooperation with plug coupling elements (24) of the gas generator (22) and with contact members (32, 34) for cooperation with a connector (36), and in that said contact members (32, 34) are short-circuited when the connector (36) is not attached.

11. Contactor and gas generator (22) according to claim 10, characterized in that the contact members (32, 34) are coaxial and when the connector (36) is not attached are short-circuited by a contact strip (16a) which is adapted to be radially spread by attachment of the connector (36).

12. Contactor and gas generator (22) according to any one of claims 2 to 11, characterized in that the first and second contact springs (14, 16) are each integrally formed with connection portions led out of the housing (10).

13. Contactor and gas generator (22) according to claims 11 and 12, characterized in that the connection portion of the second contact spring (16) is integrally connected to the contact strip (16a) and connected to the radially outer contact member (34).

14. Contactor and gas generator (22) according to claim 1 and claim 12 or 13, characterized in that the connection portion of the first contact spring (14) is connected to a connection (30a) of the plug coupling elements of the housing (10).

15. Contactor according to claim 14 and any of claims 11 to 13, characterized in that the radially inner connection (30b) of the plug coupling elements (30) is extended in the axial direction to a coaxial connection pin (24b) of the gas generator (22) and is adapted to be connected to the latter.

16. Contactor and gas generator (22) according to claim 15, characterized in that the first contact spring (14) is connected to the radially outer connection (30a) of the plug coupling elements (30), surrounding the inner connection.

## Revendications

1. Contacteur mécanique sensible aux mouvements d'un véhicule en combinaison avec un générateur pyrotechnique de gaz (22), avec un allumeur électrique (24), servant à déclencher un système de retenue dans des véhicules, le contacteur étant pourvu d'un boîtier (10), destiné à être monté de façon solidaire sur le véhicule, et d'un corps massif (12) logé de façon mobile à l'intérieur, corps qui coopère avec une paire de contacts électriques, un premier élément de contact (14), comprimé par un ressort, étant en appui sur le corps massif (12), élément de contact (14) qui est disposé à une distance prédéterminée d'un second élément de contact (16), qui coopère avec le premier élément de contact (14) en formant une paire de contacts, et le premier élément de contact (14) éloignant le corps massif (12), avec une force prédéterminée, du second élément de contact (16) pour le mettre dans une position de repos, contacteur caractérisé en ce que le boîtier (10) peut être enfilé sur l'envelope du générateur pyrotechnique de gaz (22) avec l'allumeur électrique (24) et en ce que le générateur de gaz (22) et le boîtier (10) sont équipés d'éléments d'accouplement par enfichage (24, 30), qui lors de l'enfilage du boîtier (10) sur l'enveloppe du générateur de gaz (22) viennent en prise les uns avec les autres pour raccorder l'allumeur électrique (24) au contacteur.

2. Contacteur et générateur de gaz (22) selon la revendication 1, caractérisé en ce que le premier élément de contact (14) et le second élément de contact (16) sont constitués respectivement comme premier ou second ressort de contact fixés sur le boîtier (10).

3. Contacteur et générateur de gaz (22) selon la revendication 2, caractérisé en ce que le second ressort de contact (16) se trouve, à son extrémité libre, à une distance (d) prédéterminée de la paroi intérieure du boîtier (10) et peut être dévié en direction de la paroi intérieure voisine du boîtier, par le corps massif (12), par l'intermédiaire du premier ressort de contact (14) inséré entre ceux-ci.

4. Contacteur et générateur de gaz (22) selon la revendication 3, caractérisé en ce que le premier et le second ressort de contact (14, 16) sont formés chacun sous la forme d'une lamelle de ressort.

5. Coritacteur et générateur de gaz (22) selon l'une des revendications 2 à 4, caractérisé en ce qu'un dispositif à ressort (18) se trouvant sous une contrainte prédéterminée est en prise par friction avec la surface du corps massif (12).

6. Contacteur et générateur de gaz (22) selon la revendication 5, caractérisé en ce que le dispositif à ressort est formé par une lamelle de ressort (18) fixée sur le boîtier.

7. Contacteur et générateur de gaz (22) selon l'une des revendications 2 à 6, caractérisé en ce que le corps massif (12) prend appui sur son côté tourné à l'opposé du premier ressort de contact (14), contre une vis d'ajustage (20) vissée de manière réglable dans la paroi du boîtier (10).

8. Contacteur et générateur de gaz (22) selon l'une des revendications 2 à 7, caractérisé en ce que le corps massif (12) est une bille massive.

9. Contacteur et générateur de gaz (22) selon la revendication a, caractérisé en ce que le corps massif (12) est guidé de manière rectiligne sur une paroi de fond prismatique du boîtier (10).

10. Contacteur et générateur de gaz (22), selon l'une des revendications précédentes, caractérisé en ce que le boîtier (10) de son côté est constitué sous la forme d'un connecteur intermédiaire avec des éléments d'accouplement par enfichage (30) servant à coopérer avec des éléments d'accouplement par enfichage (24) du générateur de gaz (22) et avec des pièces de contact (32, 34) servant à coopérer avec un connecteur de raccordement (36) et en ce que ces pièces de contact (32, 34) sont court-circuitées lorsque le connecteur-de raccordement (36) n'est pas enfiché.

11. Contacteur et générateur de gaz (22), selon la revendication 10, caractérisé en ce que les pièces de contact (32, 34) sont montées de façon coaxiale et quand le contacteur de raccordement (36) n'est pas enfiché, sont court-circuitées par une lamelle de contact (16a), que l'on peut écarter radialement en enfichant le connecteur de raccordement (36).

12. Contacteur et générateur de gaz (22) selon l'une des revendications 2 à 11, caractérisé en ce que le premier et le second ressort de contact (14, 16) sont réalisés chacun d'un seul tenant avec des pièces de raccordement ressortant du boîtier (10).

13. Contacteur et générateur de gaz (22) selon les revendications 11 et 12, caractérisé en ce que la pièce de raccordement du second ressort de contact (16) est raccordée d'un seul tenant à la lamelle de contact (16a) et est reliée à la pièce de contact extérieure radialement (34).

14. Contacteur et générateur de gaz (22) selon la revendication 1 et les revendications 12 ou 13, caractérisé en ce que la pièce de raccordement du premier ressort de contact (14) est connectée à un raccordement (30a) des éléments d'accouplement par enfichage du boîtier (10).

15. Contacteur et générateur de gaz (22) selon la revendication 14 et l'une des revendications 11 à 13, caractérisé en ce que le raccordement (30b) radialement intérieur des éléments d'accouplement par enfichage (30) est prolongé dans la direction axiale vers une goupille de raccordement (24b) coaxiale du générateur de gaz (22) et peut être relié avec celui-ci.

16. Contacteur et générateur de gaz (22) selon la revendication 15, caractérisé en ce que le premier ressort de contact (14) est raccordé au raccordement (30a) radialement extérieur, entourant le raccordement intérieur, des éléments d'accouplement par enfichage (30).
